# EUROPEAN PATENT SPECIFICATION

(11) **EP 2 900 004 B1**
(45) Date of publication and mention of the grant of the patent: **20.05.2020**
(21) Application number: 14199302.2
(22) Date of filing: 19.12.2014
(51) Int. Cl.: H04W 76/12

(54) **Method and mobile telecommunications network including a SAVi platform**
Verfahren und Funkkommunikationsnetzwerk mit einer SAVi-Plattform
Procédé et réseau de télécommunication mobile avec une plate-forme SAVi

(30) Priority: 20.12.2013 US 201314137210
(43) Date of publication of application: 29.07.2015
(73) Proprietor: Vodafone IP Licensing Limited, Newbury, Berkshire RG14 2FN (GB); Cisco Technology, Inc., San Jose, CA 95134 (US)
(72) Inventor: Bindrim, Walter, London, W2 6BY (GB); Moughton, John, London, W26BY (GB); Schubert, Martin, San Jose, California 95134 (US); Kaczmarska, Margaret, San Jose, California 95134 (US); Gupta, Varini, San Jose, California 95134 (US)
(74) Representative: Boult Wade Tennant LLP

(56) References cited:
- EP-A1- 2 315 412
- EP-A2- 2 538 719
- WO-A2-2013/164474
- US-A1- 2009 003 208
- US-B1- 8 571 019

## Description

### TECHNICAL FIELD

The present invention relates to a mobile telecommunications network including a core and a radio access network having radio means for wireless communication with mobile terminals registered with the network, and also to a corresponding method.

### BACKGROUND TO THE INVENTION

Conventional mobile telephone communications networks have architectures that are hierarchical and traditionally expensive to scale. Many of the network elements, such as the BTS, routers, BSC/RNC etc. are partly proprietary devices of one manufacturer often do not interface with devices from another manufacturer. This makes it difficult to introduce new capabilities into the network as a fully standardised interface will be required for devices from each manufacturer. Further, conventional base stations are not capable of intelligent local routing or processing. Furthermore, the capacity of existing networks is not always used effectively. For example, many cell sites are under used, whilst others are heavily used.

The current cellular network architecture has the following disadvantages:-
- Hierarchical and expensive to scale
- Backhaul is a major problem
- Proprietary platforms: BTS, BSC/RNC, SGSN etc
- Closed nodes and interfaces
- Very limited application or customer awareness (except for QoS priority)
- No intelligent local routing or processing
- Inefficient use of installed capacity

There is therefore a need to overcome or ameliorate at least one of the problems of the prior art. In particular there is a need to address the needs of both the network operators and the users in improving the provision of mobile broadband data services.

Today mobile service delivery is provided through the mobile operator's packet core. Such a packet core may host a series of applications for enhancing the mobile service. To offer some of the applications, e.g. caching, closer to the user, the Applicant proposed to move potential applications on to "General Purpose Hardware Platform" hardware located at the edge of the radio access network.

EP2315412 describes the introduction of a novel control means or Platform (known as a Smart Access Vision (SAVi) platform) at the network edge. To open the radio access part a "General Purpose Hardware Platform" may be implemented at the network edge. This may allow operators to split the functions of an Radio Network Controller (RNC) and/or a (e)NodeB between hardware and software. As a consequence operators have the capability to place applications and content directly at the edge of the network. The SAVi concept also introduces new functions in the network core.

SAVi may enable a mobile operator to deploy (in-line) services in radio access networks nodes such as base stations (e.g. eNodeB) and radio network controllers. Deploying such services in the radio access network can enhance the subscriber's mobile experience since service delivery avoids the link between the radio access network and the rest of the core network. Especially when services are deployed in base stations, transmitting volumes of data over a potentially narrow-band backhaul link can be reduced. Reducing these transmissions improve the round-trip delay for packet interactions and may increase the amount of bandwidth available for the mobile subscriber.

By avoiding backhaul communication for voluminous traffic, a mobile operator may be able to avoid expensive backhaul upgrades to keep pace with the capabilities of communication over the wireless channel. Examples of base station hosted services that reduce backhaul traffic are: locally hosted gaming applications with reduced latency and significantly improved response times or caching/CDN which reduce backhaul loading.

There are requirements that make service delivery through radio access network resources a challenge e.g. Lawful Intercept (LI), or charging. A Law Enforcement Agency (LEA) may demand a copy of all data transmitted to and received from a mobile subscriber for subscribers of interest. Only core network elements are deemed secure and which implies that no radio access network equipment can be used to provide the packets flows to the LEA. The implication for radio access network based services is that mechanisms need to be put in place to "copy" all data altered by services executing in the radio access network to the mobile packet core to enable the lawful intercept function.

Charging is a function that operates in the mobile packet core and counts the amount of data, time of day and use of additional services. This charging function enables the mobile operator to send a bill to the mobile operator's customer for services rendered. If services operate in the radio access network, the operator may not be able to provide accurate bills. Again, by copy of data from the radio access network to the mobile packet core as is done for the lawful intercept function existing charging infrastructures may operate without modification.

Objects of embodiments of the present invention include to manage core network mandatory and optional functions, to provide call flows to operate SAVi or similar control means in the radio access network, and to control the establishment of a control channel between a client function in the radio access network and the director function in the network core.

While the embodiments are generally applicable in a Radio Access Network (RAN), the key target deployments include LTE and iHSPA base stations. The embodiments may also operate through UMTS radio network controllers (RNCs), GSM/GPRS base station controllers (BSCs) and other RAN functions.

WO2013164474 discloses control means for use with a mobile telecommunications network including a core and a radio access network having radio means for wireless communication with mobile terminals registered with the network, wherein the radio access network includes the control means, the control means being operable to control the use of network resources by said mobile terminals; and wherein the control means is operable to host at least one application.

EP2538719 discloses a mobile telecommunications network includes a core and a radio access network having radio means for wireless communication with mobile terminals registered with the network, wherein the radio access network includes control means operable to control the use of network resources by the mobile terminals. The control means processes control plane signalling. The control means includes policy application means operable to receive policy and/or routing information from the network core and to provide instructions to the radio means to act in accordance with the policy and/or routing information.

US8571019 discloses a packet communication address delivered through in-band signaling over a circuit-switched network connection for a call, so the packet communication address can be used to establish a packet session outside the circuit-switched network. When the call is initiated from an initiating communication client to a terminating communication client using a directory number associated with the terminating communication client, a portion of the bearer path is established through the circuit-switched network between two network gateways. The packet communication address for the originating communication client may be received in a call establishment request by an originating network gateway. The originating network gateway uses in-band signaling over the bearer path to provide the packet communication address for the originating communication client to a terminating network gateway. Upon receipt of the packet communication address, the terminating network gateway initiates transferring the call to a packet session established outside the circuit-switched network.

US2009003208 discloses techniques for maintaining an always-on data session for an access terminal. Messages to keep alive the data session may be sent using non-traffic channels to avoid bringing up traffic channels just to send these messages. In one design, an access network may send a first message (e.g., a RouteUpdateRequest message) on a first non-traffic channel (e.g., a control channel) to the access terminal. The access terminal may return a second message (e.g., a RouteUpdate message) on a second non-traffic channel (e.g., an access channel) to the access network. The access network may then send a third message (e.g., for an Echo-Request) on the first non-traffic channel over a smaller area covering an approximate location of the access terminal, which may be determined based on the second message. The access terminal may return a fourth message (e.g., for an Echo-Reply) on the second non-traffic channel to the access network.

### SUMMARY OF THE INVENTION

According to a first aspect of the present invention, there is provided a mobile telecommunications network as defined in claim 1.

In response to creation or modification of a bearer, for transmitting communications of one of the mobile terminals, the client function and the director function may exchange messages there between to establish the client function services available for the bearer.

The director function may, in response to creation or modification of the bearer, send a message to request from the client function for information relating to the services available for the bearer. Downlink discovery using Echo messages is described below in section 4.1.3.

The client function may, in response to the creation or modification of the bearer, send a message including information relating to services available for the bearer to the director function. An alternative uplink discovery using Echo messages is described below in section 4.1.3.

The message may comprise a control channel echo request message, such as a GTP Request message.

The control channel echo request message may include an extension, such as a GTP Private Extension.

The client function may be operable to distinguish the control channel echo request message from other echo request messages, and to process the echo request message, rather than release the echo request message in a downlink direction.

In another embodiment, the client function, in response to receipt of a bearer data packet, may send a request for information relating to services available for the bearer to the director function. Uplink Discovery using PDUs is described below in section 4.1.4.

The network core may comprise a gateway operable to receive bearer data packets from the radio access network, wherein the client function is operable to address the request for information such that the request for information is distinguishable by the gateway from other bearer data packets, the gateway being operable to send the distinguished request for information to the director function.

The director function may, in response to creation or modification of the bearer, send a message to the client function to establish a relationship therewith in order for the director function to provide to the client function information relating to services available for the bearer. Downlink Discovery using PDUs is described below in section 4.1.5.

In further embodiment, the client function may be operable, in response to receipt of a bearer data packet, to send a message to the director function, and wherein the director function, in response to receipt of the message, establishes a relationship with the client function in order for the director function to provide to the client function with information relating to services available for the bearer. A Trigger Mechanism using G-PDU Extension Header is described below in section 4.1.6.

The network core may comprise a gateway operable to receive bearer data packets from the radio access network, wherein the message is transmitted in a bearer data packet such that the massage is distinguishable by the gateway from other bearer data packets.

The channel controller means may be operable to delete a control channel between the client function and the director function. A relationship deletion procedure is described below in from section 4.2.

The information relating to services may include an indication of applications hosted on the client function for the bearer.

In another aspect the present invention provides a method of operating a mobile telecommunications network as defined in claim 15.

### BRIEF DESCRIPTION OF THE DRAWINGS

For a better understanding of the present invention embodiments will now be described by way of example, with reference to the accompanying drawings, in which:
Figure 1 shows SAVi Core Network Integration Architecture ;
Figure 2 shows a SCND (director) Discovery Request packet;
Figure 3 shows a SCNC (client) Discovery Response packet;
Figure 4 shows a SCNC (client) SAVi Discovery Request;
Figure 5 shows a SCNC (client) SAVi Discovery Response;
Figure 6 shows the message flows in a SAVi Relationship Establishment Procedure;
Figure 7 shows a SCND (director) SAVi Open Request message in the relationship establishment procedure of Figure 6;
Figure 8 shows SCNC (client) Open Response message in the relationship establishment procedure of Figure 6; and
Figure 9 shows a SCNC (client) Open Confirm message in the relationship establishment procedure of Figure 6.

### DETAILED DESCRIPTION OF EMBODIMENTS OF THE INVENTION

### 1. Introduction

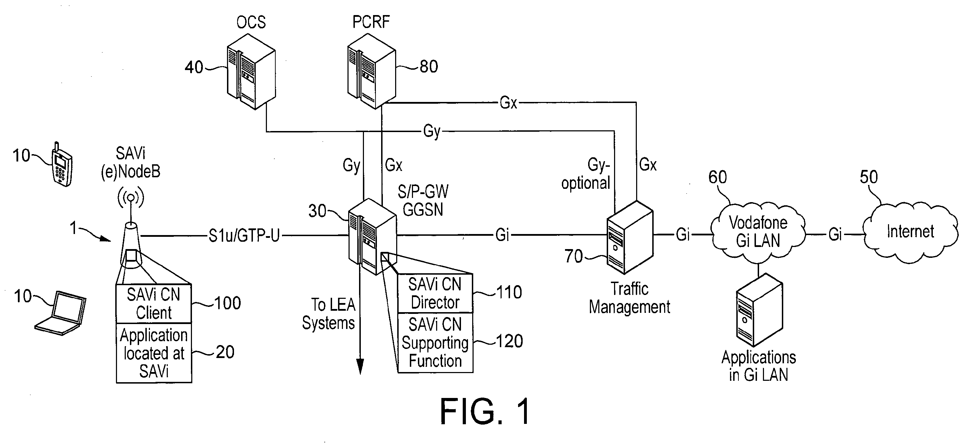

In an embodiment a control means is on Platform 1 (sometimes referred to as a SAVi platform) that provides services in a hosted SAVi processing environment. To offer core network support to a user/subscriber device 10 a SAVi Core Network integration architecture has been defined and is shown in Figure 1. Further a solution is proposed to exchange user traffic related signalling as part of the GPT-U (GPRS Tunnelling Protocol User plane) traffic.

This embodiment provides message flows and methods to establish a communication and exchange signalling messages between SAVi functions located in the network core and SAVi functions located on the SAVi Platform in the RAN (Radio Access Network).

Figure 1 shows the system architecture of certain elements of the network. The Platform 1 is provided at the network edge and provides (e)NodeB/base station functions to the mobile terminal (user entity, UE) 10 by wireless communication.

The Platform 1 further includes an application 20 (or service or function) which may generate content for supply to the UE 10. In practice, a plurality of applications are likely to be hosted on the Platform 1.

The Platform 1 is connected via an S1 interface to the core network, which comprises a gateway 30 (e.g. GGSN/P-GW/SAE-GW) The gateway 30 facilitates the provision of core network functions, such as LI by an LEA, and charging, by online charging system 40.

The gateway 30 receives content from a primary content source via the Internet 50. The primary content is delivered from the primary content source via Gi LAN 60. This content is received by traffic management function 70 before delivery to the gateway 30.

A PCRF (Policy and Charging Rules Function) apparatus 80 is also provided, in communication with the gateway 30.

The arrangement uses two special functions where one function is located in the SAVi Platform 1 a so-called SAVi CN Client 100 (SCNC 100)- and the second function - a SAVi CN Director 110 (SCND 110) - is part of the GGSN/P-GW/SAE-GW 30 or close by the GGSN/P-GW/SAE-GW 30.

The SAVi director 110 communicates with SAVi CN Client 100 (located on the SAVi Platform 1) via a communication API to, e.g., send polices or collect data. As mentioned above the SAVi Director 110 is preferably located on the GGSN/PGW/SAE-GW 30 or close by to get user information/triggers in real time.

To support a secure and trusted communication between the SAVi CN Client 100 and the SAVi Director 110 the following functions are preferably supported by the SAVi Director 110:
- Securely authenticate with SAVi CN Client 100.
- Establishment of a secure communication between SAVi CN Client 100 and SAVi Director 110.
- SAVi Director 110 also is able to exchange information with the SAVi CN Client 100.

This "director" module 110 is hosted in the mobile packet core (CN) and retrieves user identities and communicates those to the SCNC 100. The SCND 110 is responsible for managing functions and services in the SCNC 100. Thus, the SCND 110 is responsible for selecting subscribers that need to be subjected to SAVi local services, the SCND 110 manages user access services and user capabilities through SCNC 100, and SCND 110 informs the appropriate SCNCs 100 how to route traffic in the SAVi RAN environment.

The SAVi CN Client 100 is located on the SAVi server Platform 1 and may support the following functions:
- Authenticate with the SAVi Director 110.
- Inform the SAVi Director 110 about new user sessions.
- Informs the SAVi Director 110 about content and application used by a specific user.
- Steers the content flow based on the SAVi Director 110 settings pushed to the SAVi CN client 100 per user and per application.

This "client" in the SAVi Platform 1 (located in the radio access network) communicates with the core network (CN) and manages subscriber identities, policies and services to be applied on selected subscribers.

The gateway 30 further includes a SAVi core network supporting function (SCNSF) 120. The SCNSF 120 is a function located in the mobile packet core (CN) providing additional support to operate SAVi. For example, when content is modified by the SCNC 100, the SCNSF 120 function may provide supporting functionality for charging, lawful intercept and other mandatory core functions, and/or SCNSF 120 may support functionality to aid in mobility management.

The SAVi core integration architecture described above functions correctly in the environment where not all gateways are SAVi capable and not all base stations have SAVi capabilities. Further it must be considered that the S-GW and P-GW are not necessarily collocated as is shown (at gateway 30) for simplicity reasons in Figure 1.

In the embodiment all uplink and downlink user related packets are routed through SCNC 100 on the SAVi Platform 1 and through SCND 110 in the core (although this is not essential).

The proposed integration for user specific traffic and signalling provides basic core functions to SAVi Platform 1 for the user, e.g.:
- Lawful Interception
- Charging
- Policy functions

### 2. General Core network Requirements

The following is a basic list of preferred requirements from core network point of view. This embodiment meets these requirements so that service parity is delivered with and without SAVi and that there is no impact on available Gi and core services and a limited impact on the core nodes in case of introduction of SAVi.
- General core network related functions, service are not affected, such as IP Address allocation, GTP (GPRS Tunnelling Protocol)/PDP handling, Core pooling, Charging, Policy enforcement, HTTP header enrichment, or Traffic Management.
- Differentiated Services: MPC (Mobile Packet Core) remains the place that manages subscriber policies and services.
- Transparent User Behaviour: The user behaviour is consistent whether the user is connected to a base station with or without SAVi, for those services that remain available from the core network outside of SAVi-enabled base-stations.
- Security: Mutual authentication of new network elements. Content stored on a SAVi base station is safe and privacy guaranteed.
- Lawful Interception (LI) works without any modification at the LI systems and SAVi locally generated content is captured by LI systems as if content originates from the core network.

### 3. Traffic flows through SAVi

SAVi manages GTP-based traffic originating or terminating in the RAN, and terminating or originating in the mobile packet core. Examples of mobile packet core nodes are a GPRS gateway support node (GGSN) or PDN gateway (P-GW), designated 30 in Figure 1. An example of a RAN node is a LTE or iHSPA base station, designated 1 in Figure 1. SAVi (here SCNC 100) can also be applied in other RAN nodes such as RNCs.

Note that a combined S/P-GW node is not assumed. The S-GW and P-GW could be also separated. The solution is applicable to both ways of deploying S- and P-GWs.

SCNC 100 is a user-plane function that operates in the RAN and manages core related functions for the user traffic only. In the embodiment all user traffic between mobile node 1 and mobile packet core is routed via the SCNC 100. This is because the RAN nodes themselves do not have sufficient knowledge to identify users.

### 3.4. Control Traffic

SAVi system carries its user related control traffic over existing GTP-U sessions to establish end-to-end connectivity between SCNC 100 and SCND 110. This user related control traffic is encapsulated in GTP-U sessions such that each of SCNC 100 and SCND 110 recognize this traffic as non-user data traffic. The control messages are SAVi specific and have no meaning outside the SAVi realm. The user related control channel between SCNC 100 and SCND 110 is termed the "SAVi core network protocol".

The SCND 110 provides the SCNC 100 with the user identity associated with that GTP-U session via the control channel.

### 4 SAVi Core Network Protocol

A SAVi core network protocol (see section 3.4) is responsible for establishing an in-band control channel between SCNC 100 and SCND 110 that enables the SCNC 100 to apply, for example, per-user, per-traffic-type or service-type policies to user-traffic. The policies are applied in the platform 1 to route user traffic into appropriate applications/inline-services (or functions) 20A/20B hosted on the SAVi enabled (e)NodeB platform 1, responsible for providing applications as proposed. This section provides details of procedures and messages exchanged between SCNC 100 and SCND 110, and high-level formats of individual messages. SAVi Core Network Protocol is responsible for providing following functionalities:
a) A Discovery Mechanism, so as to establish SCNC 100 - SCND 110 per bearer relationship between SAVi capable (e)NodeB and SAVi capable core-network nodes.
b) A method for SCND 110 to discover SAVi Platform 1 capabilities (e.g. which services or applications are available at SAVi Platform) by requesting this information via the SCNC 100.
c) A method for SCNC 100 to update SAVi Platform 1 capabilities when changes and updates happen.

Note for b) and c): The update of applications and services 20A/20B on the SAVi Platform 1 is not performed by the SAVi core network protocol. Nevertheless the SCNC 100 needs to get informed of any changes to inform the SCND 110 accordingly. This is a function between the SCNC 100 and the SAVi Platform 1.
d) A method for SCNC 100 to obtain per-user services/applications policies from SCND 110.
e) A method for SCND 110 to update policies to SCNC 100 for a given user or service/application at any time when required.
f) A method for SCND 110 to request the policies for a specific user at any time.
g) A method for SCNC 100 to send copied user traffic (content created or modified on SAVi Platform 1) back to SCND 110 and ultimately destined to SCNSF 120, so that it can be used for, for example, Charging or Lawful Intercept functions. Corresponding functionality on SCND 110 and SCNSF 120 is provided to extract original packets and feed them into function or services, for example, the LI system expects the same content as that sent to the customer. Therefore the SCNC 100 needs to copy all downlink user content originated or modified on the SAVi Platform 1 by specific applications/services 20A/20B. The SCND 110 needs to have the information that this content is copied to decide on the next actions.

The present embodiments are not directed to providing all of the above functionalities.

In the following subsections different methods of providing an in-band control channel are discussed which satisfy the criteria mentioned above.

SAVi In-band Control Channel may be implemented based on one of three options:
1. Use Echo Request and Response messages as means to implement SCNC 100-SCND 110 discovery and data transfer
2. Use Uplink Probing where specially formatted GTP-U messages are used to implement discovery mechanism and transfer policy and data. In this case the Discovery is initiated by SCNC 100.
3. Use Downlink Probing where specially formatted GTP-U messages are used to implement discovery mechanism and transfer policy and data. In this case the Discovery is initiated by SCND 110.

The subsequent sections describe Discovery mechanism and data transfer for the in-band control channel for each of the three methods.

### 4.1 SCNC/SCND Discovery Mechanism

To establish a relationship between SCNC 100 and SCND 110 for a user bearer before any SAVi policies are applied, SCNC 100 and SNCD 110 exchange a simple protocol to establish the control channel in-band over a GTP-U session.

The following high-level information is exchanged between the various functional components in SAVi during discovery:
- SCNC 100 determines if the GGSN/P-GW 30 it is communicating with is SAVi compliant meaning that SCND 110 and SCNSF 120 are present and available for the given bearer.
- SCNC 100 determines if all required functions or services are available via the connected GGSN, P-GW 30 and it needs to get updated on any changes in the availability of these functions.

Note: Users at a specific SAVi Platform 1 may get served by different core nodes.
- SCND 110 needs to know and needs to get updated on any changes of the capabilities of the SAVi applications, functions and services 20A, 20B located in the RAN.

The following preferences are considered while determining the method and sequence of messages exchanged:
- Discovery method is in-band carried over GTP-U.
- The SCNC 100, SCND 110, relationship is dynamically established per bearer.
- In case of service updates or the introduction of new service such information is dynamically distributed.

In cases where SAVi relationship needs to be extended to Outbound Roamers based on network operator agreements, it is proposed to enable the same by local configuration on the home GGSN/P-GW 30. The configuration may be defined per vPLMN. Similarly, for the case of Inbound Roamers, it is the responsibility of the Roamer's home GGSN/P-GW to establish SAVi relationship with visited PLMN's SAVi (e)NodeB if a commercial agreement is available.

The introduction of support for EU Local Breakout (LBO) should not have any impact on SCND 110 and SCNC 100 functions. Indeed a visited network could offer SAVi services to a visitor as part of an LBO agreement.

### 4.1.1. Preferences for SCNC and SCND Discovery

1. The procedure is clearly identifiable as a discovery mechanism
2. Bearers for APNs that do not require SAVi processing must be unaffected by any SAVi procedures, e.g. no G-PDUs (Transport Protocol Data Unit, T-PDU, plus a GTP header) solely used for SAVi may be sent over them at any time. (LI and charging issues)
3. In the roamed-out case a non-SAVi supporting V-PLMN must not receive any G-PDUs solely used for SAVi from a SAVi supporting H-PLMN (LI and charging issues)
4. In the roamed-in case a SAVi-supporting V-PLMN must not send any G-PDUs solely used for SAVi to a non-SAVi supporting H-PLMN (LI and charging issues)
5. The procedure is non-disruptive for combinations of eNodeB and P-GW where one has no SAVi capability.
6. UE 10 must itself discard downlink SAVi packets if an SCNC is not present in the eNB.
7. The SAVi association set up procedure must be resistant to the UE spoofing uplink SAVi packets
8. The SAVi association set up procedure must be resistant to the external network (e.g. internet 50, PDN) spoofing SAVi packets
9. The procedure allows SCNC 100 and SCND 110 to mutually authenticate if this is required.
10. To minimise resource utilisation in the P-GW 30, the SCND 110 should not need to maintain the state of each SAVi enabled bearer. The SCNC 100 should maintain such state.
11. The procedure works both with a combined S/P-GW 30 and with standalone S-GW and P-GW. For preference, a standalone S-GW should not require modification to work with SAVi.
12. The discovery procedure works for the following scenarios: (In either case the previous cell may or may not have been SAVI-capable.)
   a. UE 10 enters a cell on a SAVi-capable eNodeB 1 and requests a new bearer
   b. UE 10 enters a cell on a SAVi-capable eNodeB 1 with an existing bearer

### 4.1.2. Discovery Initiation

Whenever SCNC 100 receives uplink or downlink traffic, it checks whether it has a SCNC 100 to SCND 110 relationship established for the bearer. If the relationship does not exist, the SCNC 100 bridges the traffic back to (e)NodeB, from where it is sent to the GW 30 or the UE 10 in the conventional manner. It does not wait for the relationship to be established. In case of bridging, no SAVi related services are offered.

This approach might result in some SAVi Users not being subjected to SAVi processing at the first time of using the service; however, this is expected to happen only when the bearer has just been created and uplink or downlink traffic arrives at SCNC 100 before the SCNC 100-SCND 110 relationship is established, or if no SAVi processing is expected for the bearer as per policies received The possible methods for mutual SCNC 100 - SCND 110 discovery are described below.

### 4.1.3. Downlink Discovery using GTP-U Echo Messages

When a new bearer is established GGSN/P-GW 30 informs SCND 110 about the bearer creation. This triggers SCND 110 to immediately initiate a GTP-U Echo Request message with Private Extensions (see more details in section 4.1.3.1) destined to SCNC 100, requesting following information from the SCNC 100:
- SAVI Compliancy Statement (Yes/No)
- Version of SAVi protocol

(e)NodeB 1, upon receipt of this GTP-U Echo Request Message with private extensions, routes it into the SCNC 100. The SCNC 100, upon inspection of this packet, learns that SAVi services are permitted for the given bearer. It records this information internally so that SAVi Services can be applied to subsequent packets arriving on this bearer. The SCNC 100 then replies to the SCND 110 with a GTP-U Echo Response message providing the information as listed above.

An alternative Uplink Discovery version of this mechanism is for the SCNC 100 to initiate the handshake by sending the Echo Request message containing a list of applications etc. and the SCND 110 replying with a GTP-U Echo Response containing the SAVi services that are permitted for the bearer.

General considerations for GTP-U Echo Discovery include:
- The use of the Echo messages will create a huge amount of traffic as the Echo messages are used per subscriber/bearer. 3GPP TS29.281 states that an Echo Request shall not be sent more often than every 60 seconds on each path. It may be necessary to exceed this for SAVi.
- An indication of the actual bearer (TEID) about which SAVi information is being requested is placed inside the GTP Echo packets.
- The Echo Discovery as described above could only be used on a single hop, e.g. between eNB 1 and a combined S/P-GW 30. In the case of a separate S-GW, the S-GW would need to include a lightweight SAVi Relay Function, which would copy Echo messages across the node, after modifying the TEIDs contained in the packet.
- Due to the limitations mentioned above the Echo Discovery is seen as an additional optional method for SCND/SCNC discovery.

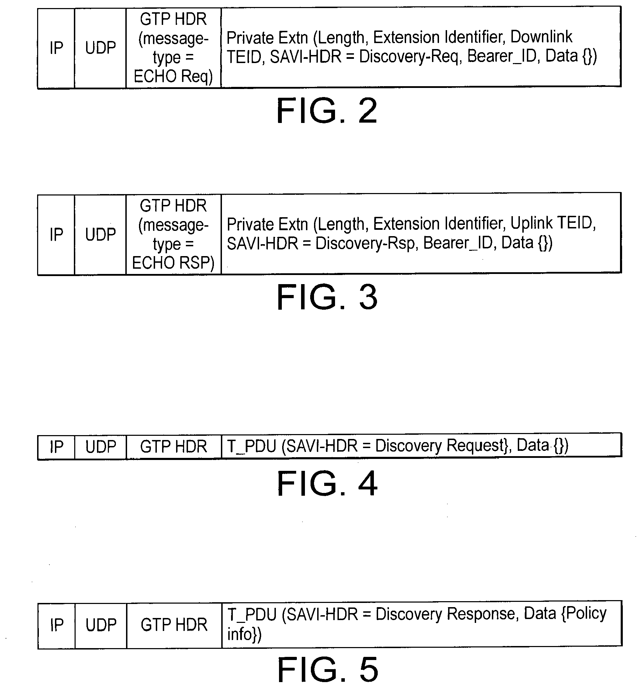

The format of the SCND 110 Discovery Request packet is shown in Figure 2.

The Discovery Request message contains the SAVi policy information for the bearer in its Data field.

Since SCNC 100 can detect that this is a SAVi Control GTP-U Echo message, it never releases the packet in downlink direction to (e)NodeB 1, and discards it after processing. The Echo response is generated by SCNC 100 itself providing the information as requested above, carried over Private Extensions.

SCNC 100 responds to the request with its SAVi compliance statement, SAVi protocol version, uplink TIED and a list of available applications 20A/20B.

The format of the SCNC Discovery Response packet is shown in Figure 3.

Note that the SCNC 100 only responds to GTP-U Echo Messages carrying SAVi information. Any other GTP-U Echo messages will be released in downlink direction and (e)NodeB 1 will respond to these messages as part of usual path management procedure.

SCND 110 implements normal ECHO retransmission strategy before deciding that there are no SAVi services possible for the bearer. Once SCNC 100 to SCND 110 relationship is established, there is only the need to perform GTP-U ECHO (with Discovery messages) when the service catalogue on SAVi Platform 1 or SCND 110 changes or there is a change in set of SAVi applications 20A/20B allowed for the bearer. Normal ECHO mechanisms can continue irrespective of these transactions though.

When new services or applications are made available at the SAVi Platform 1 (or when changes are made to services or applications already available at the SAVi Platform 1), the same messages (Echo Request and Echo Response) are used to update SCND 110, so that SCND 110 can start providing policies related to the new (or changed) functionality for new users.

When the set of SAVi services allowed for the bearer changes on the GGSN/PGW 30 the same messages (Echo Request and Echo Response) are used to update SCNC 100, so that it can enforce the new policy set.

This procedure satisfies the compatibility requirements in section 4.1.1 as follows:
1. The procedure is clearly identifiable as a discovery mechanism
   - The use of Echo messages with a clearly identifiable SAVi Private Extension IE
2. Bearers for APNs that do not require SAVi processing must be unaffected by any SAVi procedures, e.g. no G-PDUs solely used for SAVi may be sent over them at any time. (LI and charging issues)
   - No G-PDUs are used
3. In the roamed-out case a non-SAVi supporting V-PLMN must not receive any G-PDUs solely used for SAVi from a SAVi supporting H-PLMN (LI and charging issues)
   - No G-PDUs are used
4. In the roamed-in case a SAVi-supporting V-PLMN must not send any G-PDUs solely used for SAVi to a non-SAVi supporting H-PLMN (LI and charging issues)
   - No G-PDUs are used
5. The procedure is non-disruptive for combinations of eNodeB and P-GW where one has no SAVi capability.
   - The SAVi Private Extension IE will be ignored by non-SAVi eNodeB and P-GW for the downlink and uplink versions of the procedure.
   - Also, the lack of a response indicates to the SCND that the eNB is not SAVI-supporting.
6. UE must itself discard downlink SAVi packets if an SCNC is not present in the eNB.
   - This is not relevant since the Echo Request never reaches the UE.
7. The SAVi association set up procedure must be resistant to the UE spoofing uplink SAVi packets
   - No G-PDUs are used
8. The SAVi association set up procedure must be resistant to the external network (PDN) spoofing SAVi packets
   - No G-PDUs are used
9. The procedure allows SCNC and SCND to mutually authenticate if this is required.
   - This could be an option in the protocol
10. To minimise resource utilisation in the P-GW, the SCND should not need to maintain the state of each SAVi enabled bearer. The SCNC obviously has to maintain such state.
   - There is no long-term state in the SCND; only the 2-way handshake is stateful
11. The procedure works both with a combined S/P-GW and with standalone S-GW and P-GW. For preference, a standalone S-GW should not require modification to work with SAVi.
   - PARTIALLY COMPLIANT - in order to work with standalone S-GW and P-GW, the S-GW would need to include a lightweight SAVi Relay Function, which would copy Echo messages across the node, after modifying the TEIDs contained in the packet.
12. The discovery procedure works for the following scenarios:

(In either case the previous cell may or may not have been SAVI-capable.)
a) UE enters a cell on a SAVi-capable eNodeB and requests a new bearer
   - The new Bearer creation triggers SCND 110
b) UE enters a cell on a SAVi-capable eNodeB with an existing bearer
   - NOT COMPLIANT - the P-GW and therefore the SCND 110 is not aware of the cell change
      (Note that the Uplink version of this procedure is compliant in that the SCNC 100 initiates the procedure.)

### 4.1.3.1. Private Extensions

| Octets | Contents |
|---|---|
| 1 | Type = 255 (Decimal) |
| 2-3 | Length |
| 4-5 | Extension Identifier |
| 6-m | Extension Value |

The format of the "Private Extension" IE is shown above. The Extension Identifier is a value defined in the IANA list of SMI Private Enterprise Codes. This list may, e.g., be found at http://www.iana.org/assignments/enterprise-numbers/enterprise-numbers (which supersedes the one in RFC 1700 referred to in 3GPP TS 29.281).

A new number can be assigned on request to IANA or a number already assigned to the MNO could be used.

The Extension Value contains the SAVi information described above. Note that Private Extensions can only be carried in GTP-U signalling messages such as Echo Request and Response.

### 4.1.4. Uplink Discovery using G-PDUs

Uplink Discovery mechanism is initiated by SCNC 100 when a data packet (G-PDU) arrives (either downlink or uplink) and SCNC 100 does not have a SAVi relationship with a SCND 110 for this bearer. While the discovery procedure takes place between SCNC 100 and SCND 110 user packets are bridged - i.e. no SAVi services are applied until SAVi policy is sent from SCND 110. While the relationship does not exist, the SCNC 100 bridges the traffic back to (e)NodeB, from where it is sent to the GW 30 or the UE 10 in the conventional manner. In case of bridging, no SAVi related services are offered. In some cases this may cause SAVi services not be available for the initial packets until the Discovery procedure is completed but this method prevents SAVi services to be applied to bearers which are not authorized to receive them.

SCNC 100 sends a special GTP-U data message (G-PDU) to the SCND 110. The G-PDU is special because the T-PDU contained in it is addressed to the SCND 110 and is not intended for delivery to the External network (e.g. Internet 60, PDN).

The format of the packet is shown on in Figure 4.

The Discovery Mechanism is achieved by use of T_PDUs with IP addresses that could never be found in a normal GPRS bearer.

For uplink the UE 10 address is used as a source IP address to prevent the packet being dropped by the anti-source spoofing feature of the GGSN 30. Destination IP address is 0.0.0.0 which is easily detected by a SAVi GGSN/P-GW 30 and will be dropped by a non-SAVi GGSN/P-GW. Any suitable UDP port number for source is used and for destination could be Port 3386 (actually assigned to the now obsolete GTP - Version 0).

Upon receiving the Discovery Request packet, the GGSN/P-GW 30 routes the packet into SCND 110 based on presence of this unique (0.0.0.0) IP Address. SCND 110 in turn identifies the bearer and looks up its SAVi information. If the bearer is allowed to use SAVi services then SNCD 110 formulates a Response packet and includes appropriate policy in the Data field. If SAVI services are not allowed for the bearer, SCND 110 returns Response with Data field Null.

Figure 5 shows the SCNC 100 SAVi Discovery Response format.

The Discovery Response packet is sent as regular GTP-U packet with destination IP address = UE IP address and source IP address = 0.0.0.0. This will be intercepted by the SCNC 100 and not forwarded to the UE.

This procedure satisfies the compatibility requirements in section 4.1.1 as follows:
1. The procedure is clearly identifiable as a discovery mechanism
   - it uses IP addresses that cannot be used by the UE
2. Bearers for APNs that do not require SAVi processing must be unaffected by any SAVi procedures, e.g. no G-PDUs solely used for SAVi may be sent over them at any time. (LI and charging issues)
   - NOT COMPLIANT - The Discovery Request is sent on every new bearer at the eNodeB.
3. In the roamed-out case a non-SAVi supporting V-PLMN must not receive any G-PDUs solely used for SAVi from a SAVi supporting H-PLMN (LI and charging issues)
   - The SCND will not send a Discovery Response if it receives no Request.
4. In the roamed-in case a SAVi-supporting V-PLMN must not send any G-PDUs solely used for SAVi to a non-SAVi supporting H-PLMN (LI and charging issues)
   - NOT COMPLIANT - The Discovery Request is sent on every new bearer at the eNodeB.
5. The procedure shall be non-disruptive for combinations of eNodeB and P-GW where one has no SAVi capability.
   - A SAVi P-GW is only a responder so it will send nothing to a non-SAVi eNB. The Discovery Request with Destination IP address of 0.0.0.0 will be discarded by the P-GW
6. UE must itself discard downlink SAVi packets if an SCNC is not present in the eNB.
   - The UE will receive no SAVi packets if the eNB is non-SAVi.
7. The SAVi association set up procedure must be resistant to the UE spoofing uplink SAVi packets
   - The use of the Destination IP address of 0.0.0.0 for the SCND in the SAVi Discovery Request makes spoofing non-trivial but for greater security the SCNC could be required or authenticate with the SCND
8. The SAVi association set up procedure must be resistant to the external network (PDN) spoofing SAVi packets
   - The use of the Source IP address of 0.0.0.0 for the SCND makes this impossible since it is not routable from an external network
9. The procedure shall allow SCNC and SCND to mutually authenticate if this is required.
   - This may be an option in the protocol
10. To minimise resource utilisation in the P-GW, the SCND should not need to maintain the state of each SAVi enabled bearer. The SCNC does need to maintain such state.
   - There is no state in the SCND; it simply responds to a request.
11. The procedure shall work both with a combined S/P-GW and with standalone S-GW and P-GW. For preference, a standalone S-GW should not require modification to work with SAVi.
   - only standard G-PDUs are used
12. The discovery procedure shall work for the following scenarios:

(In either case the previous cell may or may not have been SAVI-capable.)
a. UE enters a cell on a SAVi-capable eNodeB and requests a new bearer
   - the SCNC initiates the procedure.
b. UE enters a cell on a SAVi-capable eNodeB with an existing bearer
   - the SCNC initiates the procedure.

### 4.1.5. Downlink Discovery using G-PDUs

This downlink discovery procedure is initiated by the SCND 110, in order to avoid the problems that arise from an uplink discovery procedure initiated from the SCNC 100. In particular it should be noted that an uplink procedure initiated by the SCNC 100 might not satisfy certain of the compatibility requirements (see list in section 4.1.1) since the SCNC 100 is not APN-aware and does not know the identity of the PLMN in which the P-GW 30 is located and therefore its SAVi capabilities.

The SCND 110 does not maintain SAVi state for each bearer. However, it does perform a stateful 3-way handshake procedure in order to establish a relationship between the SCND 110 and SCNC 100 for each bearer. The SCNC 100 does maintain the SAVI state for each bearer.

The SCNC-SCND relationship is achieved by a 3-way handshake initiated by the SCND 110, hence the term: "downlink discovery". It is triggered by any of the following events:
- For a newly-created bearer it takes place immediately after the P-GW 30 has completed the normal bearer creation procedure.
- For a RAT type change from a non-SAVI capable to a SAVI capable RAT type it takes place following the bearer modification procedure.
- For a UE entering a cell on a SAVi-capable eNodeB with an existing bearer, the trigger mechanism described in the following section is used.

The SCND 110 starts the procedure by performing checks that:
a) SAVI is enabled for this APN
b) Subscriber 10 has SAVi service
c) Subscriber 10 is not roaming or a SAVi Roaming agreement exists (Roaming is indicated by the S-GW/SGSN IP address not being in the local EPC/network core.)
d) RAT type is SAVi capable in the serving PLMN. The P-GW 30 knows the RAT type through normal GTP-C messages. The support for SAVi on this RAT type would be part of the SAVi Roaming Agreement - see c. above.

With this mode of probing, the initiation of the 3-way handshake could be selectively performed only towards a SAVi capable eNodeB 1. This would require the SCND 110 to a) identify the eNodeB that the UE is currently using, and b) consult a database (e.g. PCRF 80) to determine if this eNodeB 1 is SAVi-supporting. Based on this information, the SCND 110 could decide whether to initiate these messages towards that eNodeB 10 or not. This procedure would require usage of the ULI (User Location Information) reporting feature on core nodes. The ULI Information Element is carried in bearer creation and bearer update messages and is defined in 3GPP TS 29.060, Section 7.7.51.

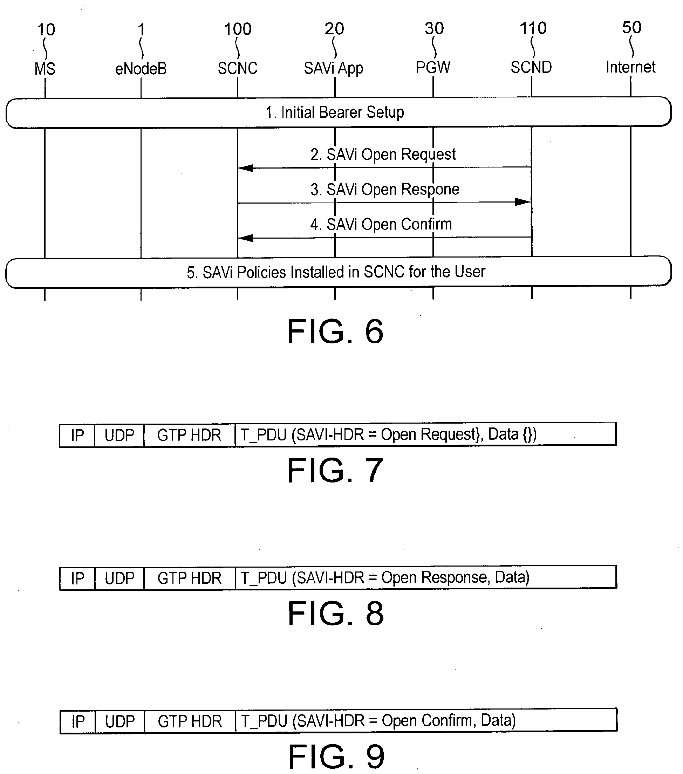

The relationship discovery procedure is shown in Figure 6.

After the initial bearer setup (step 1, Figure 6) In the event that the eNodeB 1 is determined to be SAVi-supporting or its state of SAVi support is unknown, the SCND 110 then sends a SAVi Open Request in the downlink tunnel (step 2, Figure 6).

Figure 7 shows a SCND 110 SAVi Open Request

The Data field contains:
PLMN ID (core)
SCND ID
SAVi relationship ID (generated by and unique to this SCND)
Authentication challenge 1 if required
The TPDU has Source=0.0.0.0, Destination=UE IPaddr, UDP S=tbd, D=3386

If no response is received this message is repeated up to a predetermined number of times at predetermined time intervals before the eNB 1 is considered to be non-SAVi enabled)

The SCNC 100 receives the SAVi Open Request in the downlink tunnel and it sends a SAVi Open Response on the corresponding uplink tunnel (step 3, Figure 6). (These are linked in the eNB 1 by the Bearer ID.) The SCNC 100 may reject the request if it is unable to provide SAVi service.

Figure 8 shows a SCNC 100 Open Response.

The Data field contains:
PLMN-ID (RAN)
SCND ID
Result code (accept, reject, ...)
SAVi relationship ID (This is as received from SCND unless the SAVi relationship already exists in which case the existing SAVi relationship ID is used.)
SCNC ID
Authentication response 1 if required
Authentication challenge 2 if required
The T-PDU has Source=UE IPaddr, Destination=0.0.0.0, UDP S=3386, D=as sent by SCND
(Source=UE_IPaddr ensures that the packet is not blocked by the P-GW's UE source address anti-spoofing filter.)

To complete the handshake the SCND 110 sends an Open confirm message to the SCNC 100 (step 4, Figure 6).

Figure 9 shows a SCNC 100 Open Confirm Message.

The Data field contains:
SCND ID
SAVi relationship ID (received from SCNC)
SCNC ID
Result code (accept, reject, ...)
Authentication response 2 if required
Subscriber's SAVi profile (rules)
Subscriber identity information as required

The TPDU has Source=0.0.0.0, Destination=UE IPaddr, UDP S=tbd, D=3386

The SCNC 100 now has a SAVi profile for this bearer and SAVi applications 20A,20B can be run in the eNB 1 (step 5, Figure 6).

The steps of Figure 6 can be summarised as follows:
(1) Initial Bearer Setup happens between UE 10 and P-GW 30 which acts as a trigger for the P-GW 30 to start the SAVi Relationship Establishment Procedure
   "Modify Bearer" and "Uplink Extension Header Probe" are other possible triggers to start this procedure.
(2) SCND 110 in P-GW 30 issues SAVi Open Request (as a G-PDU).
(3) The eNodeB 10, upon receiving this packet, routes it into SCNC 100. SCNC 100 responds back with SAVi Open Response (as a G-PDU).
(4) SCND 110 responds back with SAVi Open Confirm message (as a G-PDU). This message carries policies & rules to be applied to user traffic received at SCNC 100.
(5) At this point, SCNC 100 knows about the policies to be associated with a given bearer. Any subsequent traffic arriving at SCNC 100 on this bearer will be subjected to these policies.

This procedure satisfies the compatibility requirements in section 4.1.1 as follows:
1. The procedure is be clearly identifiable as a discovery mechanism
   - it uses IP addresses that cannot be used by the UE
2. Bearers for APNs that do not require SAVi processing must be unaffected by any SAVi procedures, e.g. no G-PDUs solely used for SAVi may be sent over them at any time. (LI and charging issues)
   - The Open Request is sent only on the APN for which SAVi is permitted
3. In the roamed-out case a non-SAVi supporting V-PLMN must not receive any G-PDUs solely used for SAVi from a SAVi supporting H-PLMN (LI and charging issues)
   - SAVi Open Request will not be sent if the subscriber is roamed-out unless there is a SAVi roaming agreement
4. In the roamed-in case a SAVi-supporting V-PLMN must not send any G-PDUs solely used for SAVi to a non-SAVi supporting H-PLMN (LI and charging issues)
   - No SAVi packets are sent by the SCNC until a SAVi Open Request has been received from the H-PLMN.
5. The procedure is be non-disruptive for combinations of eNodeB and P-GW where one has no SAVi capability.
   - A SAVi eNB is only a responder so it will send nothing to a non-SAVi P-GW.
   - The SAVi Open Request has a Source IP address of 0.0.0.0 which will be discarded by the UE on a non-SAVi eNB.
   - Also, the lack of a response indicates to the SCND that the eNB is not SAVI-supporting.
6. UE must itself discard downlink SAVi packets if an SCNC is not present in the eNB.
   - the SAVi Open Request Packet with Source IP address of 0.0.0.0 will be discarded by the UE
7. The SAVi association set up procedure must be resistant to the UE spoofing uplink SAVi packets
   - The use of the Destination IP address of 0.0.0.0 for the SCND in the SAVi Open Response makes spoofing non-trivial but for greater security there is the option of mutual authentication between SCND and SCNC
8. The SAVi association set up procedure must be resistant to the external network (PDN) spoofing SAVi packets
   - The use of the Source IP address of 0.0.0.0 for the SCND makes this impossible since it is not routable from an external network
9. The procedure allows SCNC and SCND to mutually authenticate if this is required.
   - This is an option in the protocol
10. To minimise resource utilisation in the P-GW, the SCND should not need to maintain the state of each SAVi enabled bearer. The SCNC obviously has to maintain such state.
   - There is no long-term state in the SCND; only the 3-way handshake is stateful
11. The procedure works both with a combined S/P-GW and with standalone S-GW and P-GW. For preference, a standalone S-GW should not require modification to work with SAVi.
   - only standard G-PDUs are used
12. The discovery procedure shall work for the following scenarios:

(In either case the previous cell may or may not have been SAVI-capable.)
a. UE enters a cell on a SAVi-capable eNodeB and requests a new bearer
   - The new Bearer creation triggers SCND to initiate the 3-way handshake
b. UE enters a cell on a SAVi-capable eNodeB with an existing bearer
   - NOT COMPLIANT - the P-GW and therefore the SCND is not aware of the cell change the mechanism described in the next section is used

### 4.1.6. Trigger Mechanism using G-PDU Extension Header

A weakness of the Uplink Discovery procedure using G-PDUs is that the SCNC 100 sends G-PDUs that are solely used for SAVi. This can potentially cause LI and charging problems for non-SAVi APNs and in the roamed-in case. Whilst the "Downlink Discovery procedure using G-PDUs" overcomes this problem it creates a new problem in that a SAVi relationship can only be established when a bearer is created or modified. When a UE enters a cell on a SAVi-capable eNodeB with an existing bearer no SAVi relationship is established.

The procedure described in this section triggers the SCND-initiated, 3-way handshake described in the Downlink Discovery procedure using G-PDUs (section 4.1.5) but rather than being triggered solely by a bearer creation or modification, it is triggered in addition by an Uplink Discovery "probe" from the SCNC 100. This eliminates the single non-compliant aspect of the Downlink Discovery procedure using G-PDUs, i.e. how to alert the SCND 110 in the case of the arrival of a UE 10 with an existing PDN context in a SAVi-supporting eNodeB 1. The "probe" is initiated by the SCNC 100 when the first uplink G-PDU is received from the UE 10 after the bearer has been created in the eNodeB 1. It is carried in a header extension field of this first one (and possibility a small number of subsequent) uplink G-PDU(s). Unlike the "Uplink Discovery procedure using G-PDUs" this procedure satisfies the requirement of not sending G-PDUs that are solely used for SAVi before it is known that both SCNC 100 and SCND 110 are present in the path. However it does rely on an uplink G-PDU arriving at the SCNC 100 from the UE 10 within a reasonable time after the bearer has been created in the eNodeB 1. It should not require any modification to the S-GW in a standalone configuration.

This probing procedure uses the header of the first one or more uplink G-PDUs (GTP-U messages carrying user data) to indicate that the eNodeB 10 is SAVi capable. It makes use of the GTP-U Extension Header feature and there are several possibilities, the use of which will be determined by the degree of transparency offered by the S-GW.

The GTP header (reproduced from 3GPP TS 29.281) may be as follows.

| | **Bits** | | | | | | | |
|---|---|---|---|---|---|---|---|---|
| **Octets** | **8** | **7** | **6** | **5** | **4** | **3** | **2** | **1** |
| 1 | Version | | | PT | (*) | E | S | PN |
| 2 | Message Type | | | | | | | |
| 3 | Length (1^{st} Octet) | | | | | | | |
| 4 | Length (2^{nd} Octet) | | | | | | | |
| 5 | Tunnel Endpoint Identifier (1^{st} Octet) | | | | | | | |
| 6 | Tunnel Endpoint Identifier (2^{nd} Octet) | | | | | | | |
| 7 | Tunnel Endpoint Identifier (3^{rd} Octet) | | | | | | | |
| 8 | Tunnel Endpoint Identifier (4^{th} Octet) | | | | | | | |
| 9 | Sequence Number (1^{st} Octet)^{1) 4)} | | | | | | | |
| 10 | Sequence Number (2^{nd} Octet)^{1) 4)} | | | | | | | |
| 11 | N-PDU Number^{2) 4)} | | | | | | | |
| 12 | Next Extension Header Type^{3) 4)} | | | | | | | |

| | | | | | | | | |
|---|---|---|---|---|---|---|---|---|
| NOTE 0: (*) This bit is a spare bit. It shall be sent as '0'. The receiver shall not evaluate this bit. NOTE 1: 1) This field shall only be evaluated when indicated by the S flag set to 1. NOTE 2: 2) This field shall only be evaluated when indicated by the PN flag set to 1. NOTE 3: 3) This field shall only be evaluated when indicated by the E flag set to 1. NOTE 4: 4) This field shall be present if and only if any one or more of the S, PN and E flags are set. | | | | | | | | |

A generic extension header (modified from 3GPP TS 29.281.) is shown below:

| | |
|---|---|
| Octet 1 | Extension Header Length |
| Octets 2 to m-1 | Extension Header Content |
| Octet m | Next Extension Header Type |

The length of the Extension Header is variable but a multiple of 4 octets, i.e. m = n*4 octets.

The two most significant bits (8 and 7) of the Extension Header Type indicate how the header shall be processed in an Endpoint Receiver of the GTP-PDU, i.e. eNB 1 or P-GW, and an Intermediate Node, i.e. S-GW, and how a recipient shall handle an unknown type. Since the uplink probe has to reach the P-GW, the requirements are:
Intermediate node (S-GW): comprehension of header not required, forward to Endpoint Receiver.
Endpoint Receiver (P-GW): comprehension of header not required.

This is for compatibility with a non-SAVI capable P-GW and to prevent it signalling an error. A SAVi-capable P-GW will comprehend it.

The coding for bits 8 and 7 must therefore be 00 (Comprehension of this extension header is not required. An Intermediate Node shall forward it to any Receiver Endpoint).

TS 29.281 lists several extension header types and whilst it does not say that other values are reserved, it is good practice not to use unallocated code points to ensure compatibility with future versions of the specification.

The preferred solution is a 3GPP standardised extension header type for both uplink and downlink "Private Information", with bits 8 and 7 set to 00 (Comprehension of this extension header is not required. An Intermediate Node shall forward it to any Receiver Endpoint), thus allowing communication between eNodeB and P-GW. For preference this extension header should be of variable length to allow various types of information to be transferred. However, as a standardised solution is not currently available, an existing header type must be used for the uplink probe and there are two candidates:
0000 0000 No more extension headers
0010 0000 Service Class Indicator

### 1. Use of "No more extension headers" Extension Header

The "No more extension headers" type is used to indicate that no other extension headers are present and the "probe" exploits a redundancy in how "no more extension headers" is signalled. Header octets 9 - 12 are present only if at least one of E, S and PN bits = 1, otherwise the header is only 8 octets long.

This is how the header looks if E, S and PN bits all =0 (Header A).

| | **Bits** | | | | | | | | |
|---|---|---|---|---|---|---|---|---|---|
| **Octets** | **8** | **7** | **6** | **5** | **4** | **3** | **2** | **1** | |
| 1 | Version=1 | | | PT=1 | Spare=0 | E=0 | | S=0 | PN=0 |
| 2 | 1111 1111 | | | | | | | | |
| 3 | Length (1^{st} Octet) | | | | | | | | |
| 4 | Length (2^{nd} Octet) | | | | | | | | |
| 5 | Tunnel Endpoint Identifier (1^{st} Octet) | | | | | | | | |
| 6 | Tunnel Endpoint Identifier (2^{nd} Octet) | | | | | | | | |
| 7 | Tunnel Endpoint Identifier (3^{rd} Octet) | | | | | | | | |
| 8 | Tunnel Endpoint Identifier (4^{th} Octet) | | | | | | | | |

| | | | | | | | | | |
|---|---|---|---|---|---|---|---|---|---|
| Bits marked 'x' can be either 0 or 1 | | | | | | | | | |

If S or PN is 1 then octets 9 - 12 must be present even if E = 0 as shown in below (Header B).

| **Octets** | **Bits** | | | | | | | |
|---|---|---|---|---|---|---|---|---|
| | **8** | **7** | **6** | **5** | **4** | **3** | **2** | **1** |
| 1 | Version=1 | | | PT= 1 | Spa re=0 | E=0 | S=1 | PN=x |
| 2 | 1111 1111 | | | | | | | |
| 3 | Length (1^{st} Octet) | | | | | | | |
| 4 | Length (2^{nd} Octet) | | | | | | | |
| 5 | Tunnel Endpoint Identifier (1^{st} Octet) | | | | | | | |
| 6 | Tunnel Endpoint Identifier (2^{nd} Octet) | | | | | | | |
| 7 | Tunnel Endpoint Identifier (3^{rd} Octet) | | | | | | | |
| 8 | Tunnel Endpoint Identifier (4^{th} Octet) | | | | | | | |
| 9 | Sequence Number (1^{st} Octet) = xxxx xxxx | | | | | | | |
| 10 | Sequence Number (2^{nd} Octet) = xxxx xxxx | | | | | | | |
| 11 | N-PDU Number = xxxx xxxx | | | | | | | |
| 12 | Next Extension Header Type = 0000 0000 | | | | | | | |

| | | | | | | | | |
|---|---|---|---|---|---|---|---|---|
| Bits marked 'X' can be either 0 or 1 | | | | | | | | |

However, the GTP header in below (Header C) with E = 1 should also be valid since the Specification does not appear to exclude the possibility of octet 12 having the value "No more extension headers".

| **Octets** | **Bits** | | | | | | | |
|---|---|---|---|---|---|---|---|---|
| | **8** | **7** | **6** | **5** | **4** | **3** | **2** | **1** |
| 1 | Version=1 | | | PT= 1 | Spa re=0 | E=1 | S=x | PN=x |
| 2 | 1111 1111 | | | | | | | |
| 3 | Length (1^{st} Octet) | | | | | | | |
| 4 | Length (2^{nd} Octet) | | | | | | | |
| 5 | Tunnel Endpoint Identifier (1^{st} Octet) | | | | | | | |
| 6 | Tunnel Endpoint Identifier (2^{nd} Octet) | | | | | | | |
| 7 | Tunnel Endpoint Identifier (3^{rd} Octet) | | | | | | | |
| 8 | Tunnel Endpoint Identifier (4^{th} Octet) | | | | | | | |
| 9 | Sequence Number (1^{st} Octet) = xxxx xxxx | | | | | | | |
| 10 | Sequence Number (2^{nd} Octet) = xxxx xxxx | | | | | | | |
| 11 | N-PDU Number = xxxx xxxx | | | | | | | |
| 12 | Next Extension Header Type = 0000 0000 | | | | | | | |

| | | | | | | | | |
|---|---|---|---|---|---|---|---|---|
| Bits marked 'x' can be either 0 or 1 | | | | | | | | |

This alternative format of a GTP header with no extension headers could therefore be used to signal a SAVi uplink "probe" since it can be distinguished from the Headers A and B above. Note that the values of S and PN do not in any way affect the validity of this approach.

Although this does not appear to be a protocol violation, it is important that the S-GW in the SAVi-capable network be checked to make sure it handles such a header in the way that is expected, i.e. it simply passes it on to the P-GW unchanged. The SAVi eNB 1 must use the format in Header C only for a G-PDU carrying a SAVi probe and if any other extension headers are being used by the eNB 1 they must be removed from G-PDUs carrying the SAVi probe.

### 2. Use of "Service Class Indicator" Extension Header

The "Service Class Indicator" header type is specified to be used in the downlink direction only and may be used by the A/Gb mode GERAN access for improved radio utilisation. It can appear on the downlink to an eNB in some circumstances.

It would appear that this could be used by SAVi in the uplink direction although it would be necessary to check that the S-GW in the SAVi-capable network would pass it on to the P-GW.

Below shows the format of the Service Class Indicator extension header.

| | |
|---|---|
| Octet 1 | 0000 0001 |
| Octet 2 | Service Class Indicator |
| Octet 3 | Spare |
| Octet 4 | Next Extension Header Type |

If bit 8 of octet 2 is set to 0 then this indicates an operator-specific value. The 16 values 0000 0000 to 0000 1111 are currently available for operator-specific use. The remaining operator-specific values 0001 0000 to 0111 1111 are described as "spare for future use". If bit 8 of octet 2 = 1, this indicates a standardised value although at the time of 3GPP Rel.11, none had been defined.

For use as a SAVi uplink probe the value 0000 FFFF is recommended although it should be possible to configure any of the 16 values in the eNB. The complete SAVi probe Service Class Indicator extension header would appear as is shown below, assuming no more extension headers.

| | |
|---|---|
| Octet 1 | 0000 0001 |
| Octet 2 | 0000 FFFF |
| Octet 3 | 0000 0000 |
| Octet 4 | 0000 0000 |

Use of this extension header type is compatible with the presence of other extension header types in the same G-PDU.

There are two implementation options for inserting this extension header in the G-PDU:
1. The SCNC 100 "tags" an uplink packet as carrying a "probe" and the eNB 1 modifies the header.
2. Packets with headers pass through the SCNC 100 and it modifies the header itself.

This probing procedure followed by Downlink Discovery procedure using G-PDUs (section 4.1.5) satisfies the compatibility requirements in section 4.1.1 as follows:
1. The procedure is clearly identifiable as a discovery mechanism
   - it uses a distinguishable GTP-U extension header for the "probe" and IP addresses that cannot be used by the UE for the 3-way handshake
2. Bearers for APNs that do not require SAVi processing must be unaffected by any SAVi procedures, e.g. no G-PDUs solely used for SAVi may be sent over them at any time. (LI and charging issues)
   - The "probe" uses an extension header in a user-generated G-PDU and the Open Request is sent only on the APN for which SAVi is permitted
3. In the roamed-out case a non-SAVi supporting V-PLMN must not receive any G-PDUs solely used for SAVi from a SAVi supporting H-PLMN (LI and charging issues)
   - SAVi Open Request will not be sent if the subscriber is roamed-out unless there is a SAVi roaming agreement
4. In the roamed-in case a SAVi-supporting V-PLMN must not send any G-PDUs solely used for SAVi to a non-SAVi supporting H-PLMN (LI and charging issues)
   - The "probe" uses an extension header in a user-generated G-PDU and no SAVi G-PDUs are sent by the SCNC until a SAVi Open Request has been received from the H-PLMN.
5. The procedure is non-disruptive for combinations of eNodeB and P-GW where one has no SAVi capability.
   - The "probe" uses an extension header in a user-generated G-PDU and a SAVi eNB will send no SAVi G-PDU to a non-SAVi P-GW. The SAVi Open Request has a Source IP address of 0.0.0.0 which will be discarded by the UE on a non-SAVi eNB.
6. UE must itself discard downlink SAVi packets if an SCNC is not present in the eNB.
   - A UE should never receive a SAVi G-PDU if there is no SCNC to trigger the downlink discovery procedure, however; a SAVi Open Request Packet with Source IP address of 0.0.0.0 would be discarded by the UE anyway
7. The SAVi association set up procedure must be resistant to the UE spoofing uplink SAVi packets
   - The use of the Destination IP address of 0.0.0.0 for the SCND in the SAVi Open Response makes spoofing non-trivial but for greater security there is the option of mutual authentication between SCND and SCNC.
8. The SAVi association set up procedure must be resistant to the external network (PDN) spoofing SAVi packets
   - The use of the Source IP address of 0.0.0.0 for the SCND makes this impossible since it is not routable from an external network
9. The procedure allows SCNC and SCND to mutually authenticate if this is required.
   - This is an option in the protocol
10. To minimise resource utilisation in the P-GW, the SCND should not need to maintain the state of each SAVi enabled bearer. The SCNC obviously has to maintain such state.
   - There is no long-term state in the SCND; only the 3-way handshake is stateful
11. The procedure works both with a combined S/P-GW and with standalone S-GW and P-GW. For preference, a standalone S-GW should not require modification to work with SAVi.
   - Only standard G-PDUs are used. The S-GW should be checked to ensure that it passes the GTP-U extension headers.
12. The discovery procedure works for the following scenarios:

(In either case the previous cell may or may not have been SAVI-capable.)
a. UE enters a cell on a SAVi-capable eNodeB and requests a new bearer
   - The new Bearer creation triggers SCND to initiate the 3-way handshake
b. UE enters a cell on a SAVi-capable eNodeB with an existing bearer
   - PARTIALLY COMPLIANT. This triggers the SCNC to send an uplink "probe" using an extension header in the next uplink G-PDU sent by the user. However, if the first packet after handover is downlink, we will still need to wait for an uplink packet from UE to be able to establish the SAVi relationship and install policies.

An alternative approach which would avoid the possible delay caused by waiting for the first uplink G-PDU, would be for the P-GW to be notified of every cell change by a bearer modification request from the MME (via the S-GW). This would then trigger the "Downlink Discovery procedure using G-PDUs". This would, however, result in increased signalling.

### 4.2. SCNC - SCND Relationship Deletion Procedure

The SCNC 100 - SCND 110 relationship for a bearer can be forcibly deleted whilst a UE 10 is connected to a SAVi-capable eNodeB 1 by either party initiating the Relationship Deletion Procedure. In both cases this results in SAVi processing ceasing for that bearer. This may be immediate or the application(s) 20A/20B may be allowed to terminate gracefully. The Close Request and Response messages use the same format as the Update Request and Update Response.

In the SCND 110-initiated deletion, the Data field in the Close Request indicates how the applications 20A/20B are to be terminated either immediately or allowed to proceed to completion. The Close Response confirms that the Close Request has been received and complied with, not that the application terminations are necessarily complete. An unexpected Close Response is ignored.

In the SCNC 100-initiated relationship deletion, the Close Request indicates that an event has occurred in the SAVi eNodeB 1 that requires the relationship to be deleted. The applications 20A/20B will no longer be processing traffic for this bearer. The Close Response confirms receipt by the SCND 110. An unexpected Close Response is ignored.

When a bearer is deleted by the user or network, or the UE 10 leaves a SAVi-capable eNodeB 1 the SCNC 100 deletes the SAVi Relationship. An activity timer may also be used to delete the SAVi relationship in the SCNC 100. It is not necessary for the SCNC 100 to notify the SCND 110 since the SCND 110 is stateless. However such information might be useful for diagnostic purposes so optionally the SCNC 100 may send a Close Request to the SCND 110 if the uplink tunnel is still available.

### 6. SAVi Platform 1 relation to SCNC 100 Requirements

### 6.1. SAVi Platform

SAVI Platform 1 needs to support proper functioning of SAVI architecture based on Client (SCNC 100) and Director (SCND 110) components as outlined herein. As outlined in Section 3, SCNC 100 implements the in-band control channel towards SCND 110 and then based on the per subscriber policies it controls routing the packet through the sequence of applications 20A/20B permitted for the user. In order to fulfil these functions SCNC 100 has to have visibility of all the uplink and downlink user traffic. Additionally, based on policies received from SCND 110, SCNC 100 needs to be able to control how packets are routed through the SAVi applications 20A/20B via the SAVi specific functions 200 on the SAVi Platform 1. Therefore the SAVi functions on the SAVi Platform 1 are responsible for routing. Furthermore for system resiliency, flexibility and extensibility when new applications 20A/20B are added, a separation between SCNC 100 and SAVI Applications 20A/20B has to be provided. Also a separation between SAVi applications 20A/20B themselves is needed. SAVi functions 200 on the SAVi Platform 1 need to be able to route the packet between various applications 20A/20B as directed by SCNC 100. Virtualized environment is one of the examples of practical implementation of a system with these properties.

### 6.2. User Data path

The SAVi compliant platform 1 always sends the user related packets to the SCNC 100. This applies to the user data packets in both uplink and downlink directions. Since both uplink and downlink user packets are exchanged between the SCNC 100 and the SAVi Platform 1, either two interfaces are needed (to/from UE 10 and from/to S-GW) or the direction (uplink or downlink) of each user packet needs to be indicated explicitly by a tag.

The SCNC 100 and the applications 20A/20B need to know the association between the uplink and downlink tunnels that constitute each bearer. In an eNodeB 10 the 4-tuple, (Uplink TEID + TLA; downlink TEID + TLA) uniquely identifies a bearer. Either the uplink or downlink pair is already present in the IP and GTP headers. The other pair could be provided in a tag. Alternatively the SAVi Platform 1 could send the 4-tuple over a separate control interface when the bearer is created.

Note that a Tunnel Endpoint Identifier (TEID) in itself does not uniquely identify a tunnel in an eNodeB. The Transport Layer Address (TLA) which is the IP address of the receiving tunnel endpoint is also required. The pair, TEID+TLA, is unambiguous.)

### 6.3. SAVi in-band control

The packets destined to the SCNC 100 are recognized by the special signature that depends on the in-band control mechanism described in this specification. These packets are sent to the SCNC 100. If there is no SCNC 100 present they will be discarded by the UE 10.

Note that there may be overlapping UE IP-Addresses on the SAVi Platform 1 in that it is possible for two bearers to have the same UE IP address. Therefore applications need to handle ID tagging of IP packets with the above-mentioned tunnel identification as a mandatory requirement.

The section headings and numbering used in this description are for ease of reference, and should not be interpreted as limiting the scope of the invention. The scope of the invention is defined by the appended claims.

## Claims

1. A mobile telecommunications network including:
a network core (30) operable to provide core network functions; and
a radio access network having control means (1), and radio means for wireless communication with mobile terminals (10) registered with the telecommunications network;
wherein the control means (1) includes a client function (100) and the network core (30) includes a director function; and
wherein user traffic between the control means (1) and the network core (30) is routed via the client function (100) and in that the network includes channel controller means operable to control the dynamic establishment of an in-band, per bearer control channel between the client function (100) and the director function (110), the control channel enabling the discovery of services available in the radio access network by transmitting user related control traffic that is recognisable as non-user data traffic.

2. The network of claim 1, wherein, in response to creation or modification of a bearer, for transmitting communications of one of the mobile terminals (10), the client function (100) and the director function (110) exchange messages therebetween to establish the client function (100) services available for the bearer.

3. The network of claim 2, wherein the director function (110), in response to creation or modification of the bearer, sends a message to request from the client function (100) information relating to the services available for the bearer.

4. The network of claim 2 or 3, wherein the client function (100), in response to the creation or modification of the bearer, sends a message including information relating to services available for the bearer to the director function (110).

5. The network of claim 2, 3 or 4, wherein the message comprises a control channel echo request message, such as an Echo Request message.

6. The network of claim 5, wherein the control channel echo request message includes an extension, such as a Private Extension.

7. The network of claim 5 or 6, wherein the client function (100) is operable to distinguish the control channel echo request message from other echo request messages, and to process the echo request message, rather than release the echo request message in a downlink direction.

8. The network of claim 1, wherein the client function (100), in response to receipt of a bearer data packet, sends a request for information relating to services available for the bearer to the director function (110).

9. The network of claim 8, wherein the network core (30) comprises a gateway (30) operable to receive bearer data packets from the radio access network, wherein the client function (100) is operable to address the request for information such that the request for information is distinguishable by the gateway (30) from other bearer data packets, the gateway (30) being operable to send the distinguished request for information to the director function (110).

10. The network of claim 1, wherein the director function (110), in response to creation or modification of the bearer, sends a message to the client function (100) to establish a relationship therewith in order for the director function (110) to provide to the client function (100) information relating to services available for the bearer.

11. The network of claim 1, wherein the client function (100) is operable, in response to receipt of a bearer data packet, to send a message to the director function (110), and wherein the director function (110), in response to receipt of the message, establishes a relationship with the client function (100) in order for the director function (110) to provide to the client function (100) with information relating to services available for the bearer.

12. The network of claim 11, wherein the network core (30) comprises a gateway (30) operable to receive bearer data packets from the radio access network, wherein the message is transmitted in a bearer data packet such that the massage is distinguishable by the gateway (30) from other bearer data packets.

13. The network of any one of claims 1 to 11, wherein the channel controller means is operable to delete a control channel between the client function (100) and the director function (110).

14. The network of any one of claims 1 to 13, wherein the information relating to services includes an indication of applications hosted on the client function (100) for the bearer.

15. A method of operating a mobile telecommunications network including:
a network core (30) operable to provide core network functions; and
a radio access network having control means (1), and radio means for wireless communication with mobile terminals (10) registered with the telecommunications network;
wherein the control means (1) includes a client function (100) and the network core (30) includes a director function; and
wherein user traffic between the control means (1) and the network core (30) is routed via the client function (100) and in that the network includes channel controller means which controls the dynamic establishment of an in-band, per bearer control channel between the client function (100) and the director function (110), the control channel enabling the discovery of services available in the radio access network by transmitting user related control traffic that is recognisable as non-user data traffic.

## Patentansprüche

1. Ein Mobiltelekommunikationsnetzwerk, das Folgendes beinhaltet:
einen Netzwerkkern (30), der betriebsfähig ist, um Kernnetzwerkfunktionen bereitzustellen; und
ein Funkzugriffsnetzwerk, das ein Steuerungsmittel (1) und ein Funkmittel zur drahtlosen Kommunikation mit Mobilendgeräten (10), die in dem Telekommunikationsnetzwerk registriert sind, aufweist;
wobei die das Steuerungsmittel (1) eine Client-Funktion (100) beinhaltet und der Netzwerkkern (30) eine Direktorfunktion beinhaltet; und
wobei Benutzerverkehr zwischen dem Steuerungsmittel (1) und dem Netzwerkkern (30) über die Client-Funktion (100) geroutet wird und das Netzwerk ein Kanalsteuereinheitsmittel beinhaltet, das betriebsfähig ist, um die dynamische Einrichtung eines In-Band-, Pro-Träger-Steuerungskanals zwischen der Client-Funktion (100) und der Direktorfunktion (110) zu steuern, wobei der Steuerungskanal die Entdeckung von Diensten, die in dem Funkzugriffsnetzwerk verfügbar sind, durch Übertragen von benutzerbezogenem Steuerungsverkehr, der als Nicht-Benutzerdaten-Verkehr erkennbar ist, ermöglicht.

2. Netzwerk nach Anspruch 1, wobei als Reaktion auf eine Erzeugung oder Modifizierung eines Trägers, zum Übertragen von Kommunikationen von einem der Mobilendgeräte (10), die Client-Funktion (100) und die Direktor-Funktion (110) Nachrichten zwischen sich austauschen, um die Dienste der Client-Funktion (100) einzurichten, die für den Träger verfügbar sind.

3. Netzwerk nach Anspruch 2, wobei die Direktor-Funktion (110) als Reaktion auf eine Erzeugung oder Modifizierung des Trägers eine Nachricht sendet, um von der Client-Funktion (100) Informationen anzufordern, die sich auf die Dienste beziehen, die für den Träger verfügbar sind.

4. Netzwerk nach Anspruch 2 oder 3, wobei die Client-Funktion (100) als Reaktion auf eine Erzeugung oder Modifizierung des Trägers eine Nachricht an die Direktor-Funktion (110) sendet, die Informationen beinhaltet, die sich auf Dienste beziehen, die für den Träger verfügbar sind.

5. Netzwerk nach Anspruch 2, 3 oder 4, wobei die Nachricht eine Steuerungskanalechoanforderungsnachricht, wie etwa eine Echoanforderungsnachricht, umfasst.

6. Netzwerk nach Anspruch 5, wobei die Steuerungskanalechoanforderungsnachricht eine Erweiterung, wie etwa eine private Erweiterung, beinhaltet.

7. Netzwerk nach Anspruch 5 oder 6, wobei die Client-Funktion (100) betriebsfähig ist, um die Steuerungskanalechoanforderungsnachricht von anderen Echoanforderungsnachrichten zu unterscheiden, und die Echoanforderungsnachricht zu verarbeiten, anstatt die Echoanforderungsnachricht in einer Abwärtsstreckenrichtung freizugeben.

8. Netzwerk nach Anspruch 1, wobei die Client-Funktion (100) als Reaktion auf einen Empfang eines Trägerdatenpakets an die Direktor-Funktion (110) eine Anforderung für Informationen sendet, die sich auf Dienste beziehen, die für den Träger verfügbar sind.

9. Netzwerk nach Anspruch 8, wobei der Netzwerkkern (30) ein Gateway (30) umfasst, das betriebsfähig ist, um Trägerdatenpakete von dem Funkzugriffsnetzwerk zu empfangen, wobei die Client-Funktion (100) betriebsfähig ist, um die Anforderung für Informationen zu adressieren, sodass die Anforderung für Informationen von dem Gateway (30) von anderen Trägerdatenpaketen unterscheidbar ist, wobei das Gateway (30) betriebsfähig ist, um die unterschiedene Anforderung für Informationen an die Direktor-Funktion (110) zu senden.

10. Netzwerk nach Anspruch 1, wobei die Direktor-Funktion (110) als Reaktion auf eine Erzeugung oder Modifizierung des Trägers eine Nachricht an die Client-Funktion (100) sendet, um eine Beziehung mit dieser einzurichten, sodass die Direktor-Funktion (110) der Client-Funktion (100) Informationen bereitstellt, die sich auf Dienste beziehen, die für den Träger verfügbar sind.

11. Netzwerk nach Anspruch 1, wobei die Client-Funktion (100) betriebsfähig ist, um als Reaktion auf einen Empfang eines Trägerdatenpakets eine Nachricht an die Direktor-Funktion (110) zu senden, und wobei die Direktor-Funktion (110) als Reaktion auf einen Empfang der Nachricht eine Beziehung mit der Client-Funktion (100) einrichtet, sodass die Direktor-Funktion (110) der Client-Funktion (100) Informationen bereitstellt, die sich auf Dienste beziehen, die für den Träger verfügbar sind.

12. Netzwerk nach Anspruch 11, wobei der Netzwerkkern (30) ein Gateway (30) umfasst, das betriebsfähig ist, um Trägerdatenpakete von dem Funkzugriffsnetzwerk zu empfangen, wobei die Nachricht in einem Trägerdatenpaket übertragen wird, sodass die Nachricht von dem Gateway (30) von anderen Trägerdatenpaketen unterscheidbar ist.

13. Netzwerk nach einem der Ansprüche 1 bis 11, wobei das Kanalsteuereinheitsmittel betriebsfähig ist, um einen Steuerungskanal zwischen der Client-Funktion (100) und der Direktor-Funktion (110) zu löschen.

14. Netzwerk nach einem der Ansprüche 1 bis 13, wobei die Informationen, die sich auf die Dienste ziehen, eine Anzeige von Anwendungen umfassen, die auf der Client-Funktion (100) für den Träger gehostet werden.

15. Verfahren zum Betreiben eines Mobiltelekommunikationsnetzwerks, das Folgendes beinhaltet:
einen Netzwerkkern (30), der betriebsfähig ist, um Kernnetzwerkfunktionen bereitzustellen; und
ein Funkzugriffsnetzwerk, das ein Steuerungsmittel (1) und ein Funkmittel zur drahtlosen Kommunikation mit Mobilendgeräten (10), die in dem Telekommunikationsnetzwerk registriert sind, aufweist;
wobei die das Steuerungsmittel (1) eine Client-Funktion (100) beinhaltet und der Netzwerkkern (30) eine Direktorfunktion beinhaltet; und
wobei Benutzerverkehr zwischen dem Steuerungsmittel (1) und dem Netzwerkkern (30) über die Client-Funktion (100) geroutet wird und das Netzwerk ein Kanalsteuereinheitsmittel beinhaltet, das die dynamische Einrichtung eines In-Band-, Pro-Träger-Steuerungskanals zwischen der Client-Funktion (100) und der Direktorfunktion (110) steuert, wobei der Steuerungskanal die Entdeckung von Diensten, die in dem Funkzugriffsnetzwerk verfügbar sind, durch Übertragen von benutzerbezogenem Steuerungsverkehr, der als Nicht-Benutzerdaten-Verkehr erkennbar ist, ermöglicht.

## Revendications

1. Un réseau de télécommunications mobile comprenant :
un noyau de réseau (30) conçu de façon à fournir des fonctions de réseau noyau, et
un réseau d'accès radio possédant un moyen de commande (1) et un moyen radio destinés à une communication sans fil avec des terminaux mobiles (10) enregistrés auprès du réseau de télécommunications,
où le moyen de commande (1) comprend une fonction client (100) et le noyau de réseau (30) comprend une fonction directeur, et
où un trafic utilisateur entre le moyen de commande (1) et le noyau de réseau (30) est acheminé par l'intermédiaire de la fonction client (100) et le réseau comprend un moyen de dispositif de commande de canal conçu de façon à commander l'établissement dynamique d'un canal de commande par porteuse dans la bande entre la fonction client (100) et la fonction directeur (110), le canal de commande permettant la découverte de services disponibles dans le réseau d'accès radio par la transmission de trafic de commande relatif à l'utilisateur qui est reconnaissable en tant que trafic de données de non-utilisateur.

2. Le réseau selon la Revendication 1, où, en réponse à la création ou la modification d'une porteuse, pour la transmission de communications d'un des terminaux mobiles (10), la fonction client (100) et la fonction directeur (110) échangent des messages entre eux de façon à établir les services de fonction client (100) disponibles pour la porteuse.

3. Le réseau selon la Revendication 2, où la fonction directeur (110), en réponse à la création ou la modification de la porteuse, envoie un message de demande à partir de la fonction client (100) d'informations relatives aux services disponibles pour la porteuse.

4. Le réseau selon la Revendication 2 ou 3, où la fonction client (100), en réponse à la création ou la modification de la porteuse, envoie un message contenant des informations relatives à des services disponibles pour la porteuse à la fonction directeur (110).

5. Le réseau selon la Revendication 2, 3 ou 4, où le message comprend un message de demande d'écho de canal de commande, tel qu'un message de demande d'écho.

6. Le réseau selon la Revendication 5, où le message de demande d'écho de canal de commande comprend une extension, telle qu'une extension privée.

7. Le réseau selon la Revendication 5 ou 6, où la fonction client (100) est conçue de façon à distinguer le message de demande d'écho de canal de commande d'autres messages de demande d'écho et à traiter le message de demande d'écho plutôt que de libérer le message de demande d'écho dans une direction en liaison descendante.

8. Le réseau selon la Revendication 1, où la fonction client (100), en réponse à la réception d'un paquet de données de porteuse, envoie une demande d'informations relatives à des services disponibles pour la porteuse à la fonction directeur (110).

9. Le réseau selon la Revendication 8, où le noyau de réseau (30) comprend une passerelle (30) conçue de façon à recevoir des paquets de données de porteuse à partir du réseau d'accès radio, où la fonction client (100) est conçue de façon à adresser la demande d'informations de sorte que la demande d'informations puisse être distinguée par la passerelle (30) d'autres paquets de données de porteuse, la passerelle (30) étant conçue de façon à envoyer la demande distinguée d'informations à la fonction directeur (110).

10. Le réseau selon la Revendication 1, où la fonction directeur (110), en réponse à la création ou la modification de la porteuse, envoie un message à la fonction client (100) de façon à établir une relation avec celle-ci afin que la fonction directeur (110) fournisse à la fonction client (100) des informations relatives à des services disponibles pour la porteuse.

11. Le réseau selon la Revendication 1, où la fonction client (100) est conçue, en réponse à la réception d'un paquet de données de porteuse, de façon à envoyer un message à la fonction directeur (110), et où la fonction directeur (110), en réponse à la réception du message, établit une relation avec la fonction client (100) afin que la fonction directeur (110) fournisse à la fonction client (100) des informations relatives à des services disponibles pour la porteuse.

12. Le réseau selon la Revendication 11, où le noyau de réseau (30) comprend une passerelle (30) conçue de façon à recevoir des paquets de données de porteuse à partir du réseau d'accès radio, où le message est transmis dans un paquet de données de porteuse de sorte que le message puisse être distingué par la passerelle (30) d'autres paquets de données de porteuse.

13. Le réseau selon l'une quelconque des Revendications 1 à 11, où le moyen de dispositif de commande de canal est conçu de façon à supprimer un canal de commande entre la fonction client (100) et la fonction directeur (110).

14. Le réseau selon l'une quelconque des Revendications 1 à 13, où les informations relatives à des services comprennent une indication d'applications hébergées sur la fonction client (100) pour la porteuse.

15. Un procédé d'actionnement d'un réseau de télécommunications mobile comprenant :
un noyau de réseau (30) conçu de façon à fournir des fonctions de réseau noyau, et
un réseau d'accès radio possédant un moyen de commande (1) et un moyen radio destinés à une communication sans fil avec des terminaux mobiles (10) enregistrés auprès du réseau de télécommunications,
où le moyen de commande (1) comprend une fonction client (100) et le noyau de réseau (30) comprend une fonction directeur, et
où un trafic utilisateur entre le moyen de commande (1) et le noyau de réseau (30) est acheminé par l'intermédiaire de la fonction client (100) et le réseau comprend un moyen de dispositif de commande de canal qui commande l'établissement dynamique d'un canal de commande par porteuse dans la bande entre la fonction client (100) et la fonction directeur (110), le canal de commande permettant la découverte de services disponibles dans le réseau d'accès radio par la transmission de trafic de commande relatif à l'utilisateur qui est reconnaissable en tant que trafic de données de non-utilisateur.
